# EUROPÄISCHE PATENTANMELDUNG

(11) **EP 1 050 451 A1**
(43) Veröffentlichungstag der Anmeldung: **08.11.2000**
(21) Anmeldenummer: 99810373.3
(22) Anmeldetag: 03.05.1999
(51) Int. Cl.: B62D 53/06, B62D 63/06, B60P 3/07

(54) **Sattelschlepperkupplung**

(71) Anmelder: Steiner, Frank, 3210 Kerzers (CH)
(72) Erfinder: Steiner, Frank, 3210 Kerzers (CH)
(74) Vertreter: Roshardt, Werner Alfred, Dipl.-Phys.

(57) **Zusammenfassung**

Eine Sattelschlepperkupplung zum wahlweise lösbaren Ankuppeln eines Sattelaufliegers an einen Sattelschlepper umfasst ein gelenkig mit dem Sattelschlepper verbindbares erstes Kupplungsteil (110, 150, 210, 310) und ein starr am Sattelauflieger anbringbares zweites Kupplungsteil (120, 160, 260, 320), wobei zum Ankuppeln des Sattelaufliegers am Sattelschlepper die beiden Kupplungsteile (110, 150, 210, 310, 120, 160, 260, 320) starr miteinander verbindbar sind. Durch die erfindungsgemässe Sattelschlepperkupplung wird die Möglichkeit geschaffen, einen Sattelauflieger entweder gelenkig an einen Sattelschlepper oder starr an einen weiteren Sattelauflieger anzukuppeln.

## Beschreibung

### Technisches Gebiet

Die vorliegende Erfindung betrifft eine Sattelschlepperkupplung zum wahlweise lösbaren Ankuppeln eines Sattelaufliegers an einen Sattelschlepper, einen mit einer solchen Sattelschlepperkupplung ausgerüsteten Sattelzug sowie einen Sattelschlepper und einen Sattelauflieger für einen solchen Sattelzug.

### Stand der Technik

Unter einem Sattelzug wird ein für Strassentransporte geeignetes Transportfahrzeug verstanden, das einen für die Aufnahme von Transportgut ausgebildeten Sattelauflieger (d.h. einen Anhänger ohne Vorderachse) und einen Sattelschlepper (d.h. ein Zugfahrzeug mit einer Plattform, die zum Auflegen und Ankuppeln der Vorderpartie eines Sattelaufliegers ausgebildet ist) umfasst.

Eine konventionelle Sattelschlepperkupplung zum wahlweise lösbaren Ankuppeln eines Sattelaufliegers an einen Sattelschlepper umfasst ein am Sattelschlepper angeordnetes erstes Kupplungsteil in Form einer Sattelplatte und ein am Sattelauflieger angeordnetes zweites Kupplungsteil in Form eines Königszapfens. In der Sattelplatte ist eine Tasche zur Aufnahme des Königszapfens ausgebildet. In angekuppeltem Zustand ist der Königszapfen drehbar in dieser Tasche aufgenommen, wodurch eine gelenkige Verbindung zwischen dem ersten Kupplungsteil und dem zweiten Kupplungsteil und somit zwischen dem Sattelschlepper und dem Sattelauflieger geschaffen wird.

Heutzutage wird ein beträchtlicher Teil der auf Strassen transportierten Güter mittels Sattelzügen transportiert. Um die beim Warentransport kaum vermeidbaren Leerfahrten zu vermindern wäre es wünschenswert, wenn ein oder mehrere leere (d.h. transportgutfreie) Sattelzüge mittels eines anderen transportgutfreien Sattelzuges transportiert werden könnten. Auf diese Weise könnte z.B. mittels zweier Sattelzügen Transportgut von einem Ausgangsort zu einem Bestimmungsort transportiert und am Bestimmungsort abgeladen werden, und anschliessend der eine Sattelzug mittels des anderen zum Ausgangsort zurück transportiert werden. Damit liessen sich bis zu 50% der Leerfahrten vermeiden.

Die einfachste Möglichkeit, mittels eines ersten Sattelzuges einen weiteren Sattelzug zu transportieren, bestünde darin, den weiteren Sattelzug nach Art eines Anhängers an den ersten Sattelzug anzukuppeln. Damit bloss ein einziges, und nicht zwei weitere Fahrzeuge, angekuppelt werden müsste, könnte der zweite Sattelauflieger an den ersten Sattelauflieger angekuppelt und der zweite Sattelschlepper auf den zweiten oder den ersten Sattelauflieger verladen werden.

In den meisten Ländern ist es aus Sicherheitsgründen jedoch verboten, an einen gelenkig an ein Zugfahrzeug (z.B. einen Sattelschlepper) angekuppelten Anhänger oder Sattelauflieger ein weiteres Fahrzeug (z.B. einen Anhänger oder einen Sattelauflieger) gelenkig anzukuppeln. Mittels konventioneller Sattelschlepperkupplungen ist es somit nicht möglich, für den gegenseitigen Transport von Sattelzügen einen zweiten Sattelauflieger an einen ersten Sattelauflieger anzukuppeln, der an einem Sattelschlepper angekuppelt ist.

### Darstellung der Erfindung

Aufgabe der vorliegenden Erfindung ist die Angabe einer Sattelschlepperkupplung, welche es ermöglicht, einen Sattelauflieger wahlweise entweder an einen Sattelschlepper oder an einen weiteren Sattelauflieger anzukuppeln.

Die Lösung der Aufgabe ist Gegenstand der unabhängigen Patentansprüche.

Gemäss der Erfindung umfasst eine Sattelschlepperkupplung zum wahlweise lösbaren Ankuppeln eines Sattelaufliegers an einen Sattelschlepper ein gelenkig mit dem Sattelschlepper verbindbares erstes Kupplungsteil und ein starr am Sattelauflieger anbringbares zweites Kupplungsteil, wobei zum Ankuppeln des Sattelaufliegers am Sattelschlepper die beiden Kupplungsteile starr miteinander verbindbar sind.

Unter einer starren Verbindung zweier Teile (bzw. einer starren Kupplung, einer starren Befestigung, einer starren Anordnung oder einem starren Anbringen eines ersten an einem zweiten Teil) wird im Zuge der vorliegenden Beschreibung und den Ansprüchen eine im wesentlichen steife, gelenkfreie, verwindungsfeste und unverschiebliche Verbindung der beiden Teile miteinander verstanden. Zwei starr miteinander verbundene Teile gemäss dieser Definition weisen bezüglich einander fixierte Relativpositionen auf. Sie sind weder translatorisch noch rotatorisch relativ zueinander bewegbar.

Gemäss der Erfindung ist ein erstes Kupplungsteil gelenkig mit dem Sattelschlepper verbindbar bzw. gelenkig am Sattelschlepper anbringbar. Ähnlich wie das erste Kupplungsteil einer konventionellen Sattelschlepperkupplung in Form einer Sattelplatte ist das erste Kupplungsteil einer erfindungsgemässen Sattelschlepperkupplung vorzugsweise permanent am Sattelschlepper angebracht. Ein zweites Kupplungsteil ist gemäss der Erfindung starr am Sattelauflieger anbringbar bzw. an diesem befestigbar, wobei das zweite Kupplungsteil - analog zu einem zweiten Kupplungsteil in Form eines Königszapfens einer konventionellen Sattelschlepperkupplung - wiederum vorzugsweise permanent am Sattelauflieger angebracht ist. Im Gegensatz zu einer konventionellen Sattelschlepperkupplung, bei welcher der Königszapfen in angekuppeltem Zustand gelenkig mit der Sattelplatte verbunden ist, werden bei der erfindungsgemässen Sattelschlepperkupplung zum Ankuppeln des Sattelaufliegers am Sattelschlepper die beiden Kupplungsteile starr miteinander verbunden. In angekuppeltem Zustand ist somit das zweite Kupplungsteil einerseits starr am Sattelauflieger angebracht und andrerseits starr mit dem ersten Kupplungsteil verbunden. Dadurch ist in angekuppeltem Zustand nebst dem zweiten, sattelaufliegerseitigen Kupplungsteil auch das erste, sattelschlepperseitige Kupplungsteil starr mit dem Sattelauflieger verbunden. Das zum Fahren des Sattelzuges erforderliche Gelenk wird zwischen dem ersten Kupplungsteil und dem Sattelschlepper bereit gestellt, indem das erste Kupplungsteil gelenkig mit dem Sattelschlepper verbunden ist.

Ein Sattelauflieger, in dessen vorderem Bereich ein zweites Kupplungsteil einer erfindungsgemässen Sattelschlepperkupplung zum Ankuppeln an einen mit einem ersten Kupplungsteil einer erfindungsgemässen Sattelschlepperkupplung versehenen Sattelschlepper starr angebracht ist, kann mittels dieses zweiten Kupplungsteils ebensogut anstatt an einen Sattelschlepper auch an einen anderen Sattelauflieger (oder an irgend ein beliebiges anderes Fahrzeug) angekuppelt werden, in dessen hinterem Bereich ein erstes Kupplungsteil für eine erfindungsgemässe Sattelschlepperkupplung angebracht ist. Vorzugsweise ist das erste Kupplungsteil starr am anderen Sattelauflieger bzw. am anderen Fahrzeug angebracht, denn dann wird in angekuppeltem Zustand durch die erfindungsgemässe Sattelschlepperkupplung eine starre Verbindung zwischen dem anderen Sattelauflieger und dem an diesem angekuppelten Sattelauflieger geschaffen, weil ja - wie oben ausgeführt - zum Ankuppeln das erste Kupplungsteil (das hier starr im Hinterbereich des anderen Sattelaufliegers angebracht ist) und das zweite Kupplungsteil (das starr im Vorderbereich des angekuppelten Sattelaufliegers angebracht ist) starr miteinander verbunden sind. Dadurch wird ein gesetzeskonformes Ankuppeln eines Sattelaufliegers an einen anderen Sattelauflieger ermöglicht, der gelenkig an einem Sattelschlepper angekuppelt ist. Die starr zusammengekuppelten Sattelauflieger bilden in Bezug auf das Fahrverhalten im Prinzip einen einzigen (langen) Sattelauflieger.

Auf die starr zusammengekuppelten Sattelauflieger kann z.B. ein Sattelschlepper verladen werden kann. Damit die Gesamthöhe der zusammengekuppelten Sattelauflieger mit aufgeladenem Sattelschlepper nicht übermässig gross wird, können auf einem oder auf beiden Sattelaufliegern Vertiefungen für die Aufnahme der Räder des aufzuladenden Sattelschleppers vorgesehen sein.

Durch die Erfindung wird somit die Möglichkeit geschaffen, einen mit einem zweiten Kupplungsteil einer erfindungsgemässen Sattelschlepperkupplung versehenen Sattelauflieger mittels dieses zweiten Kupplungsteils entweder gelenkig an einen Sattelschlepper (an welchem ein erstes Kupplungsteil für eine erfindungsgemässe Sattelschlepperkupplung gelenkig angebracht ist) oder starr an einen weiteren Sattelauflieger (an welchem ein erstes Kupplungsteil für eine erfindungsgemässe Sattelschlepperkupplung starr angebracht ist) anzukuppeln.

Gemäss einer bevorzugten Ausführungsform einer erfindungsgemässen Sattelschlepperkupplung weist ein Teil des aus dem ersten Kupplungsteil und dem zweiten Kupplungsteil gebildeten Teilepaares eine nach Art eines Steckers ausgebildete Partie und das andere Teil dieses Teilepaares eine nach Art einer Buchse ausgebildete Partie auf, wobei die Steckerpartie und die Buchsenpartie derart ausgebildet und angeordnet sind, dass zum Ankuppeln die Steckerpartie in die Buchsenpartie einschiebbar ist und in angekuppeltem Zustand durch die Stecker-Buchsen-Anordnung eine senkrecht zur Einschieberichtung wirkende, formschlüssige Verbindung zwischen den beiden Kupplungsteilen geschaffen wird. Die steckerförmige Partie kann beispielsweise am sattelaufliegerseitigen Kupplungsteil ausgebildet und derart am Sattelauflieger angeordnet sein, dass sie in Sattelaufliegerlängsrichtung in die am sattelschlepperseitigen Kupplungsteil ausgebildete buchsenförmige Partie einführbar ist. Die steckerförmige Partie kann kastenförmig ausgebildet und die buchsenförmige Partie mit einem der Kastenform entsprechenden Hohlraum versehen sein, um eine ausreichende Stabilität und Steifigkeit der Sattelschlepperkupplung zu erreichen, damit die beträchtlichen Kräfte und Momente, welche während der Fahrt eines mit der Sattelschlepperkupplung ausgerüsteten Sattelzuges entstehen, aufgenommen werden können. In angekuppeltem Zustand kann die Steckerpartie mit Spielpassung in der Buchsenpartie aufgenommen werden.

Vorteilhafterweise ist die Steckerpartie zumindest in ihrem vordersten Bereich keilförmig ausgebildet. Dadurch kann beim Ineinanderschieben von Stecker und Buchse zum Zwecke des Ankuppelns eines Fahrzeuges an ein anderes Fahrzeug die Stecker-Buchsen-Anordnung gleichzeitig als Zentriervorrichtung wirken, um Abweichungen bei der relativen Positionierung der Fahrzeuge zueinander auszugleichen, wie sie beim Manövrieren der Fahrzeuge auftreten, wenn sie hintereinander positioniert werden. Auf diese Art können seitliche Abweichungen von der Fahrzeuglängsrichtung, Abweichungen in der Höhe und/oder Abweichungen in der Drehlage des gelenkig am Sattelschlepper angebrachten Kupplungsteils derart ausgeglichen werden, dass ein automatisches Ankuppeln des Sattelaufliegers an den Sattelschlepper ermöglicht wird. Die mit einer Zentriervorrichtung versehene erfindungsgemässe Sattelschlepperkupplung nach Art einer Stecker-Buchsen-Anordnung eignet sich zudem in vorteilhafter Weise für ein vollständig automatisches Ankuppeln eines Sattelaufliegers an einen Sattelschlepper, indem zum Verbinden der zwischen dem Sattelschlepper und dem Sattelauflieger erforderlichen elektrischen, hydraulischen und/oder pneumatischen Verbindungsleitungen diese ebenfalls durch die Zentriervorrichtung der Sattelschlepperkupplung zentriert werden können. Die Kupplungen zum Aneinanderkuppeln der entsrechenden Verbindungsleitungen können auf einfache Art in die Sattelschlepperkupplung nach Art einer Stecker-Buchsen-Anordnung integriert werden. Zum Ankuppeln eines Sattelaufliegers an einen Sattelschlepper müssen dann überhaupt keine Manipulationen mehr von Hand zwischen dem Sattelauflieger und dem Sattelschlepper ausgeführt werden.

Es versteht sich von selbst, dass eine Sattelschlepperkupplung gemäss dieser bevorzugten Ausführungsform mit einer steckerförmigen Partie an einem Kupplungsteil und einer buchsenförmigen Partie am andern Kupplungsteil weiter mit Verriegelungsmitteln versehen ist, welche in angekuppeltem Zustand die beiden ineinanderschiebbaren Kupplungsteile in Schieberichtung bezüglich einander verriegeln. In Kombination mit der Stecker-Buchsen-Anordnung, die senkrecht zur Schieberichtung formschlüssig verbindend wirkt, wird dann insgesamt eine starre Verbindung zwischen den beiden Kupplungsteilen geschaffen. Solche Verriegelungsmittel können z.B. Bolzen umfassen, welche zum Zwecke der Verriegelung durch Bohrungen im ersten und zweiten Kupplungsteil hindurch führbar sind. Als Alternative können die Verriegelungsmittel auch eine Haken und Bolzen umfassende Anordnung umfassen, die nach Art einer gebräuchlichen Schnellkupplung ausgebildet und an den beiden Kupplungsteilen der Sattelschlepperkupplung angeordnet sind.

Gemäss einer weiteren bevorzugten Ausführungsform ist das erste Kupplungsteil einer erfindungsgemässen Sattelschlepperkupplung starr an einer gelenkig mit dem Sattelschlepper verbindbaren Basisvorrichtung befestigt, welche zum Anbringen eines oder mehrerer weiterer mit dem Sattelauflieger verbindbaren Elemente ausgebildet ist. In angekuppeltem Zustand der Sattelschlepperkupplung ist die Basisvorrichtung gelenkig mit dem Sattelschlepper und starr mit dem Sattelauflieger verbunden. Dadurch können die an der Basisvorrichtung angebrachten Verbindungselemente - selbst wenn sie starr mit dem Sattelauflieger verbunden sind - auch während der Fahrt des Sattelzuges mit dem Sattelauflieger verbunden bleiben. Die Basisvorrichtung kann als Plattform ausgebildet sein, welche zum Anbringen des ersten Kupplungsteils und der mit dem Sattelauflieger verbindbaren Elemente ausgebildet ist. Vorzugsweise ist das erste Kupplungsteil als integrales Bestandteil dieser Basisvorrichtung ausgebildet.

Eine bevorzugte Variante einer erfindungsgemässen Sattelschlepperkupplung zeichnet sich dadurch aus, dass das erste Kupplungsteil mittels eines ersten Drehgelenks um eine in Bezug auf die Sattelschlepperlängsrichtung im wesentlichen horizontale Querachse schwenkbar und mittels eines zweiten, einen Drehkranz umfassenden Drehgelenks um eine in Bezug auf den Sattelschlepper im wesentlichen senkrechte Schwenkachse schwenkbar am Sattelschlepper angelenkt ist. Als Drehkranz wird vorzugsweise ein Kugeldrehkranz verwendet, wobei unter einem Kugeldrehkranz ein Drehkranz mit einem Kugellager verstanden wird. Als Alternative ist jedoch auch ein Drehkranz mit einem Kegelrollenlager, einem Gleitlager oder irgend einem anderen die Drehung des Drehkranzes gewährleistenden Lager möglich. Es versteht sich von selbst, dass im Falle einer Sattelschlepperkupplung mit einer Basisvorrichtung diese mittels des ersten und des zweiten Drehgelenks direkt und das erste Kupplungsteil indirekt über die Basisvorrichtung am Sattelschlepper angelenkt sind.

Eine andere bevorzugte Variante einer erfindungsgemässen Sattelschlepperkupplung zeichnet sich dadurch aus, dass das erste Kupplungsteil an einer Adaptervorrichtung angeordnet ist, die mit einem Königszapfen versehen ist, welcher in einer Tasche einer am Sattelschlepper angeordneten, als Teil einer konventionellen Sattelschlepperkupplung ausgebildeten Sattelplatte aufnehmbar ist. Diese Variante der erfindungsgemässen Sattelschlepperkupplung bietet den Vorteil, dass durch die Adaptervorrichtung ein Anhängen von mit einem zweiten Kupplungsteil für eine erfindungsgemässe Sattelschlepperkupplung ausgerüsteten Sattelaufliegern an Sattelschleppern ermöglicht wird, die mit einem sattelschlepperseitigen Kupplungsteil einer konventionellen Sattelschlepperkupplung ausgerüstet sind. Im Falle einer Sattelschlepperkupplung mit einer Basisvorrichtung kann die Adaptervorrichtung gleichzeitig als Basisvorrichtung ausgebildet sein, welche zum Anbringen eines oder mehrerer weiterer mit dem Sattelauflieger verbindbaren Elementen ausgebildet ist.

Erfindungsgemäss ist ein einen Sattelschlepper und einen Sattelauflieger umfassender Sattelzug mit einer Sattelschlepperkupplung versehen, welche ein gelenkig mit dem Sattelschlepper verbundenes erstes Kupplungsteil und ein starr am Sattelauflieger angebrachtes zweites Kupplungsteil umfasst, wobei zum Ankuppeln des Sattelaufliegers am Sattelschlepper die beiden Kupplungsteile starr miteinander verbindbar sind.

Bei einem erfindungsgemässen Sattelzug ist vorzugsweise das erste Kupplungsteil starr an einer gelenkig am Sattelschlepper angeordneten Basisvorrichtung befestigt, welche zum Anbringen eines oder mehrerer weiterer mit dem Sattelauflieger verbindbaren Elemente ausgebildet ist. Ein solcher Sattelzug ist vorteilhafterweise derart ausgebildet, dass wenigstens ein Teil der Wände eines auf dem Sattelauflieger angeordneten Transportgutbehälters in leerem Zustand des Transportgutbehälters auf der Basisvorrichtung verstaubar ist. Dabei kann der Sattelzug derart ausgebildet sein, dass ein Teil oder sämtliche der auf der Basisvorrichtung verstaubaren Wände auch nach dem Loskuppeln des Sattelaufliegers auf der am Sattelschlepper angebrachten Basisvorrichtung verbleiben können. Insbesondere kann beispielsweise die Frontwand eines Transportgutbehälters permanent auf der Basisvorrichtung angebracht sein. Durch das Verstauen eines Teils oder sogar sämtlicher Wände des Transportgutbehälters auf der Basisvorrichtung kann auf der Ladefläche des Sattelaufliegers Platz geschaffen werden, der beispielsweise zum Verladen eines anderen Fahrzeuges, insbesondere eines anderen Sattelschleppers oder eines anderen Sattelzuges, genutzt werden kann.

Zum Verstauen eines Teils oder sogar sämtlicher Wände des Transportgutbehälters auf der am Sattelschlepper angeordneten Basisvorrichtung kann der Transportgutbehälter teleskopartig zusammenschiebbar ausgebildet sein. Ein solcher Transportgutbehälter kann z.B. aus einer Mulde bestehen, die aus zwei oder mehreren teleskopartig zusammenschiebbaren Teilen zusammengesetzt ist, oder aus einem Tank oder einem Silo, der mehrere teleskopartig zusammenschiebbare Abschnitte aufweist. Als Alternative zu einem teleskopartig zusammenschiebbaren Transportgutbehälter kann ein Transportgutbehälter auch mit zusammenklappbaren oder zusammenfaltbaren Wänden versehen sein.

Zum Zwecke des Verstauens auf der Basisvorrichtung kann ein Transportgutbehälter im wesentlichen auch aus einem zusammenfaltbaren, z.B. textilen Material gefertigt sein. Ein solcher faltbarer Container kann beispielsweise als Flüssigkeitsbehälter oder als faltbarer Sack zur Aufnahme von Mehl, Staub oder anderen pumpbaren Materialien ausgebildet sein. Der Faltcontainer kann weiter mit einem in Fahrzeuglängsrichtung verschiebbaren und zusammenklappbaren Gestell nach Art einer Scherenkinematik versehen sein. Vorzugsweise ist ein zur Aufnahme von pumpbaren Materialien ausgebildeter Behälter derart konstruiert, dass er in leerem Zustand mittels einer zum Fördern des Transportguts vorgesehenen Förderpumpe zusammengefaltet werden kann, indem mittels der Förderpumpe ein Vakuum im Behälter erzeugt wird.

Ein erfindungsgemässer Sattelschlepper zeichnet sich durch ein gelenkig mit dem Sattelschlepper verbundenes erstes Kupplungsteil für eine erfindungsgemässe Sattelschlepperkupplung aus.

Vorzugsweise ist bei einem erfindungsgemässen Sattelschlepper das erste Kupplungsteil starr an einer gelenkig am Sattelschlepper angeordneten Basisvorrichtung befestigt, an welcher weiter ein Betätigungselement einer Entleerungsvorrichtung angebracht ist, das mit einem Transportgutbehälter verbindbar ist, der auf einem an den Sattelschlepper ankuppelbaren Sattelauflieger angeordnet ist, wobei die Entleerungsvorrichtung zum Entleeren des Tranportgutbehälters ausgebildet ist. Durch diesen Aspekt der Erfindung wird die Möglichkeit geschaffen, kostengünstige Sattelauflieger mit entleerbaren Transportgutbehältern (vorzugsweise für den Schüttguttransport) herzustellen, z.B. in Form von Sattelaufliegern mit Kippmulden, Sattelaufliegem mit Kippsilos oder Sattelaufliegern mit Ausstosserbehältern. Bisher musste, wenn für den Transport von verschiedenartigen Transportgütern wie z.B. Steinblöcken, Steinmehl oder Asphalt unterschiedliche Kippanhänger erforderlich waren, für jeden Kippanhänger je eine separate Hubvorrichtung zum Kippen bereit gestellt werden. Demgegenüber können gemäss dem oben erwähnten Aspekt der Erfindung kostengünstige Kippanhänger ohne Hubvorrichtung hergestellt werden. Die Hubvorrichtung bleibt permanent auf dem Sattelschlepper angeordnet und kann nach dem Ankuppeln eines mit einer entsprechenden Kippmulde oder einem entsprechenden Kippsilo versehenen Sattelaufliegers mit dem Kippbehälter verbunden werden. Es muss deshalb bloss noch eine einzige Hubvorrichtung für den Sattelschlepper bereit gestellt werden, welche permanent am Sattelschlepper angebracht sein kann. Sämtliche der an diesen Sattelschlepper ankuppelbaren Kippanhänger (für die verschiedenartigen Transportgüter) können dann ohne eigene Hubvorrichtung konstruiert werden. Mit der am Sattelschlepper angebrachten Hubvorrichtung können je nach angehängtem Sattelauflieger eine Kippmulde für Steinblöcke, eine Kippmulde für Asphalt oder ein Kippsilo zum Kippen betätigt werden. Weil die Basisvorrichtung in angekuppeltem Zustand starr mit dem Sattelauflieger und gelenkig mit dem Sattelschlepper verbunden ist, kann das Betätigungselement für die Entleerungsvorrichtung (z.B. in Form eines teleskopischen Hubzylinders zum Kippen eines Kippbehälters oder in Form eines teleskopischen Ausstosszylinders zum Ausstossen eines Ausstosserbehälters) auch während der Fahrt mit dem auf dem Sattelauflieger angeordneten Transportgutbehälter verbunden bleiben.

Ein erfindungsgemässer Sattelauflieger zeichnet sich durch ein starr in einem vorderen Bereich des Sattelaufliegers angebrachten zweites Kupplungsteil für eine erfindungsgemässe Sattelschlepperkupplung aus.

Vorzugsweise ist in einem hinteren Bereich eines erfindungsgemässen Sattelaufliegers weiter ein erstes Kupplungsteil für eine erfindungsgemässe Sattelschlepperkupplung derart starr anbringbar, dass an diesen Sattelauflieger mittels dieses ersten Kupplungsteils und eines zweiten Kupplungsteils für eine erfindungsgemässe Sattelschlepperkupplung, das starr in einem vorderen Bereich eines weiteren Sattelaufliegers anbringbar ist, der weitere Sattelauflieger angekuppelt werden kann. In angekuppeltem Zustand sind die beiden Sattelauflieger mittels der sie kuppelnden Kupplungsteile starr miteinander verbunden. Dadurch wird ein gesetzeskonformes Ankuppeln des weiteren Sattelaufliegers an den mit einem ersten Kupplungsteil in seinem hinteren Bereich versehenen Sattelauflieger ermöglicht, der gelenkig an einem Sattelschlepper angekuppelt ist.

Vorteilhafterweise sind die beiden starr aneinander kuppelbaren Sattelauflieger und die sie kuppelnden Kupplungsteile derart ausgebildet, dass die Sattelauflieger beim Zusammenkuppeln teilweise ineinaderschiebbar sind, so dass die Gesamtlänge der aneinandergekuppelten Sattelauflieger kleiner ist als die Summe der Länge der beiden einzelnen Sattelauflieger. Zu diesem Zwecke können die beiden Kupplungsteile z.B. wie oben beschrieben mit einer steckerförmigen Partie an einem Kupplungsteil und einer buchsenförmigen Partie am andern Kupplungsteil versehen sein, so dass sie in Fahrzeuglängsrichtung ineinanderschiebbar sind. Die Verriegelungsmittel zum Verriegeln der beiden Kupplungsteile können derart ausgebildet sein, dass die Kupplungsteile in verschiedenen Schiebepositionen bezüglich einander verriegelt und starr miteinander verbunden werden können. Entsprechend den verschiedenen Verriegelungspositionen ergeben sich verschiedene Gessamtlängen der aneinandergekuppelten Sattelauflieger. Als Alternative oder Ergänzung zur Längenverstellung mittels unterschiedlichem Ineinanderschiebens der Kupplungsteile können auch das erste Kupplungsteil in unterschielichen Längspositionen im hinteren Bereich des ersten Sattelaufliegers und/oder das zweite Kupplungsteil in unterschielichen Längspositionen im vorderen Bereich des weiteren Sattelaufliegers starr anbringbar sein, um die Länge der aneinandergekuppelten Sattelauflieger verkürzen zu können.

Die Möglichkeit der Längenverkürzung von starr aneinadergekuppelten erfindungsgemässen Sattelaufliegern erweist sich insbesondere zum starren Aneinaderkuppeln von drei oder noch mehr Sattelaufliegern als vorteilhaft. Dadurch können drei oder noch mehr erfindungsgemässe Sattelauflieger, in deren hinteren Bereich je ein erstes Kupplungsteil für eine erfindungsgemässe Sattelschlepperkupplung starr anbringbar ist, starr zusammengekuppelt und im Prinzip zu einem einzigen Sattelauflieger vereinigt werden, dessen Gesamtlänge unterhalb der höchstzulässige Gesamtlänge für Sattelauflieger liegt.

Es versteht sich von selbst, dass ein erstes Kupplungsteil für eine erfindungsgemässe Sattelschlepperkupplung auch starr in einem hinteren Bereich eines Sattelaufliegers angebracht werden kann, in dessen vorderem Bereich anstelle eines zweiten Kupplungsteil für eine erfindungsgemässe Sattelschlepperkupplung ein Königszapfen zum Ankuppeln dieses Sattelaufliegers an einen mit einer konventionellen Sattelplatte versehenen Sattelschlepper angeordnet ist. An diesen Sattelauflieger kann ebenfalls ein weiterer Sattelauflieger angekuppelt werden, in dessen vorderem Bereich ein zweites Kupplungsteil für eine erfindungsgemässe Sattelschlepperkupplung starr angeordnet ist.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen.

### Kurze Beschreibung der Zeichnungen

Die Zeichnungen stellen bevorzugte Ausführungsarten der vorliegenden Erfindung dar. Es zeigen:
- Fig. 1: eine Anordnung aus zwei Sattelzügen mit je einer Sattelschlepperkupplung gemäss einer ersten bevorzugten Ausführungsart der Erfindung in einer schematischen Seitenansicht;
- Fig. 2.a: einen Sattelzug mit einer Sattelschlepperkupplung gemäss einer zweiten bevorzugten Ausführungsart der Erfindung in einer schematischen Seitenansicht;

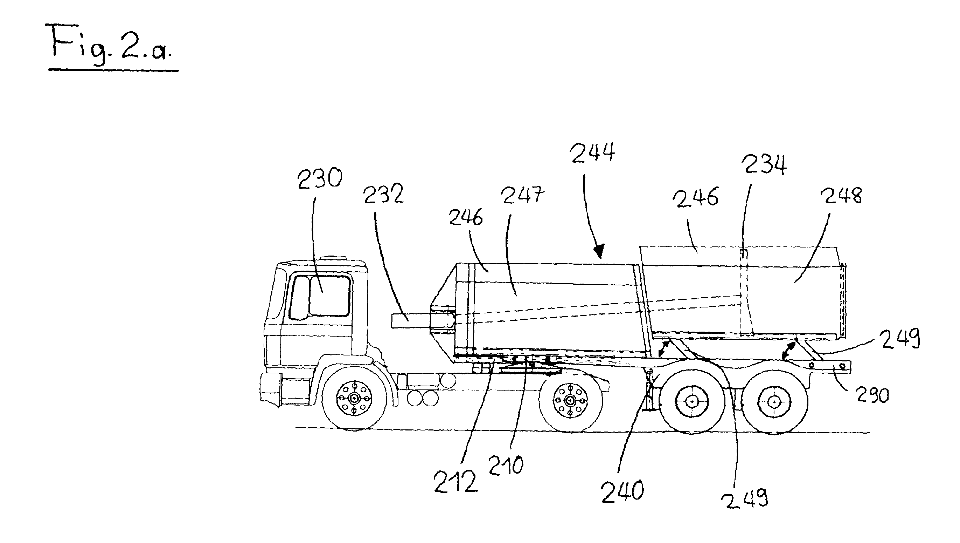

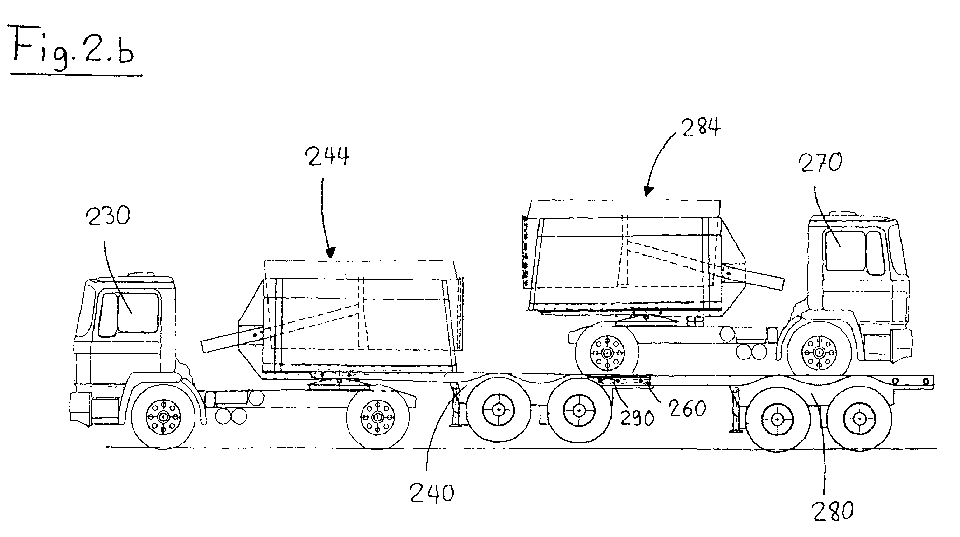

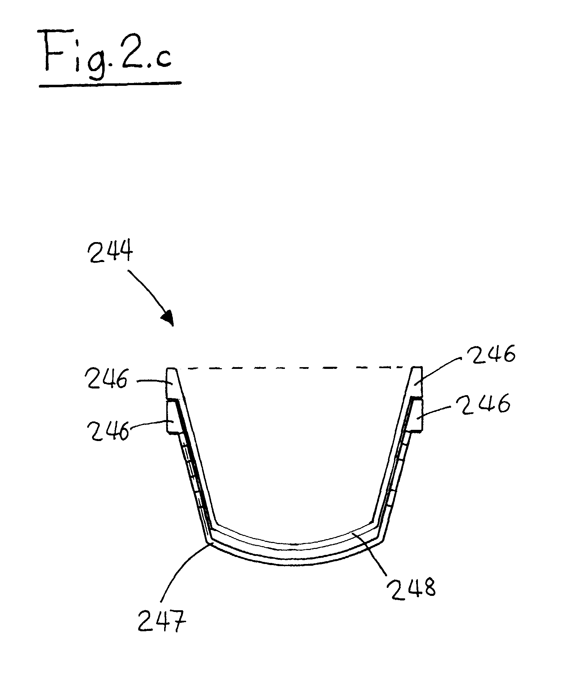

- Fig. 2.b: eine Anordnung aus zwei Sattelzügen gemäss Fig. 2.a in einer schematischen Seitenansicht;
- Fig. 2.c: Detailansicht im Querschnitt durch einen Sattelzug in Fig. 2.b;

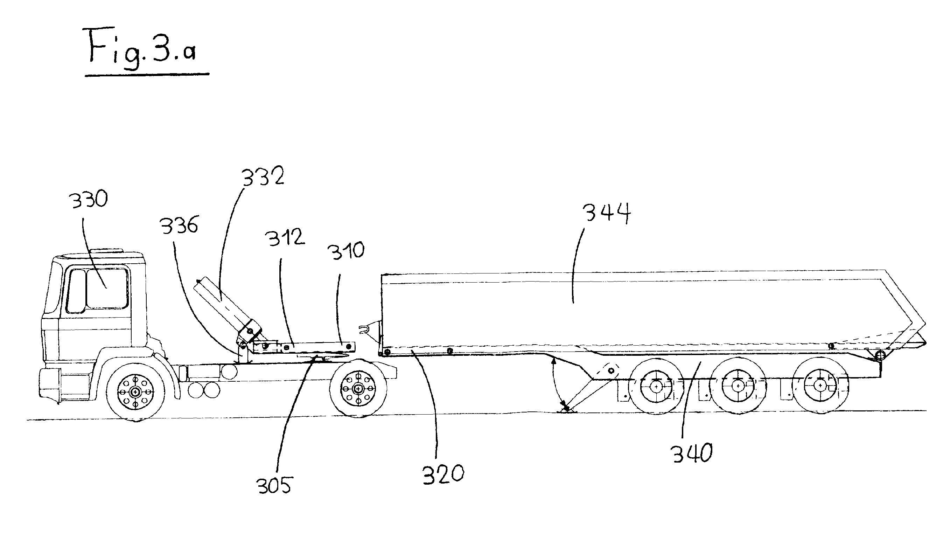

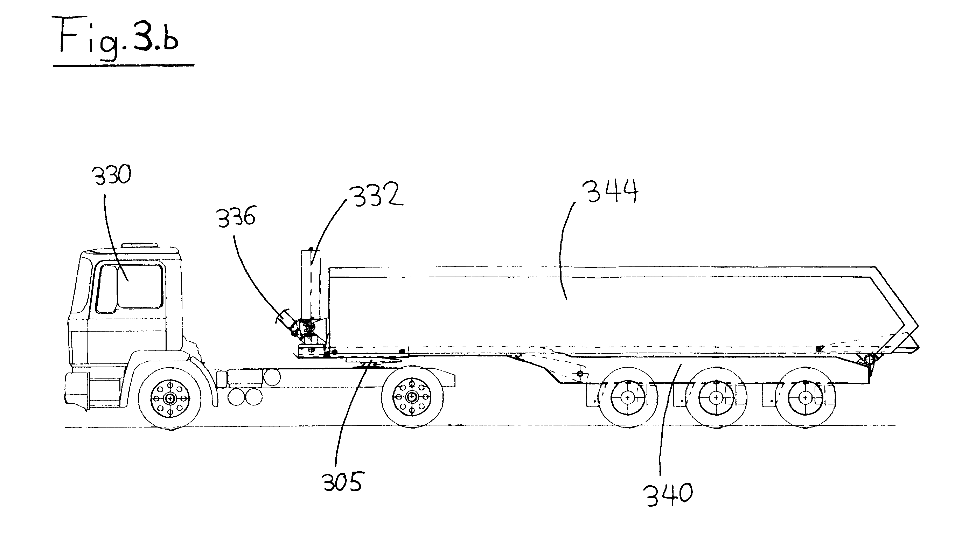

- Fig. 3.a: eine schematische Seitenansicht eines Sattelzuges mit einer Sattelschlepperkupplung gemäss einer dritten bevorzugten Ausführungsart der Erfindung, in einem Zustand mit vom Sattelschlepper abgekuppeltem Sattelauflieger;
- Fig. 3.b: eine schematische Seitenansicht des Sattelzuges in Fig. 3.a in einem Zustand mit an den Sattelschlepper angekuppeltem Sattelauflieger.

Grundsätzlich sind in den Figuren gleiche Teile mit gleichen Bezugszeichen versehen.

### Wege zur Ausführung der Erfindung

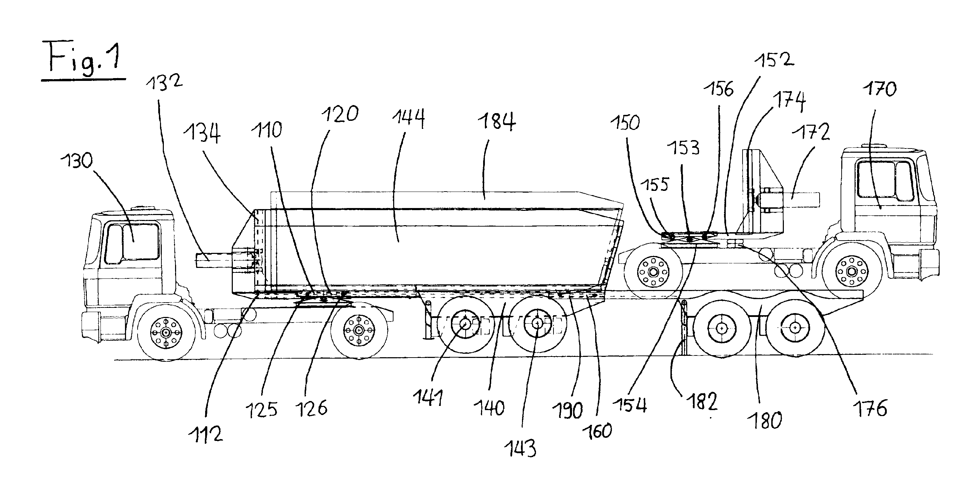

In der Figur 1 ist eine Anordnung aus zwei im wesentlichen identischen, zum gegenseitigen Verladen ausgebildeten Sattelzügen gemäss einer ersten bevorzugten Ausführungsart der Erfindung dargestellt. Die beiden Sattelzüge sind je mit einer identischen Sattelschlepperkupplung gemäss einer ersten bevorzugten Variante der Erfindung versehen.

Die beiden Sattelzüge umfassen je einen Sattelschlepper 130, 170 und einen Sattelauflieger 140, 180. In der Figur 1 sind die beiden Sattelzüge in einer Anordnung dargestellt, in welcher der Sattelauflieger 180 des zweiten Sattelzuges (nachfolgend als zweiter Sattelauflieger 180 bezeichnet) an den Sattelauflieger 140 des ersten Sattelzuges (nachfolgend als erster Sattelauflieger 140 bezeichnet) angekuppelt ist und der Sattelschlepper 170 des zweiten Sattelzuges (nachfolgend als zweiter Sattelschlepper 170 bezeichnet) auf die Ladefläche des zweiten Sattelaufliegers 180 verladen ist. Das sattelschlepperseitige Kupplungsteil 110, 150 der Sattelschlepperkupplung ist in der Darstellung der Fig. 1 am Beispiel des auf den zweiten Sattelauflieger 180 verladenen zweiten Sattelschleppers 170, der von seinem zugehörigen Sattelauflieger 180 entkuppelt ist, deutlicher erkennbar, als am Beispiel des Sattelschleppers 130 des ersten Sattelzuges (nachfolgend als erster Sattelschlepper 130 bezeichnet), an den der erste Sattelauflieger 140 angekuppelt ist.

Die Sattelschlepperkupplung zum wahlweise lösbaren Ankuppeln des zweiten Sattelaufliegers 180 an den zweiten Sattelschlepper 170 umfasst ein an der Plattform des zweiten Sattelschleppers 170 gelenkig angebrachtes erstes Kupplungsteil 150. Das erste Kupplungsteil 150 ist als integrale Partie im hinteren Bereich einer plattformartigen Basisvorrichtung 152 ausgebildet, welche mittels eines ersten Drehgelenks um eine in Bezug auf die Sattelschlepperlängsrichtung im wesentlichen horizontale Querachse 153 schwenkbar und mittels eines zweiten, einen Drehkranz 154 umfassenden Drehgelenks um eine in Bezug auf den Sattelschlepper 150 im wesentlichen senkrechte Schwenkachse schwenkbar am zweiten Sattelschlepper 150 angelenkt ist.

Das erste Kupplungsteil 150 ist nach Art eines kastenförmigen Steckers 150 ausgebildet und das zweite Kupplungsteil 160, das starr im vordersten Bereich des zweiten Sattelaufliegers 180 angebracht ist, ist derart buchsenförmig ausgebildet und mit einem der Kastenform des ersten Kupplungsteils 150 entsprechenden Hohlraum versehen, dass zum Ankuppeln des zweiten Sattelaufliegers 180 an den zweiten Sattelschlepper 170 das erste Kupplungsteil 150 in das zweite Kupplungsteil 160 einschiebbar ist und in angekuppeltem Zustand (wie er in Fig. 1 am Beispiel der Sattelschlepperkupplung des ersten Sattelzuges dargestellt ist, welche zur Sattelschlepperkupplung des zweiten Sattelzuges identisch ist) durch die Stecker-Buchsen-Anordnung eine senkrecht zur Einschieberichtung wirkende formschlüssige Verbindung zwischen den beiden Kupplungsteilen 150, 160 geschaffen wird.

Das steckerförmige erste Kupplungsteil 110, 150 ist in seinem hintersten, dem Sattelauflieger 140, 180 zugewandten Bereich keilförmig ausgebildet, um beim Einschieben des steckerförmigen ersten Kupplungsteils 110, 150 in das buchsenförmige zweite Kupplungsteil 120, 160 im Zuge des Ankuppelns des Sattelaufliegers 140, 180 an den Sattelschlepper 130, 170 als Zentriervorrichtung zu wirken, damit Abweichungen bei der relativen Positionierung des Sattelschleppers 130, 170 bezüglich des anzukuppelnden Sattelaufliegers 140, 180 ausgeglichen werden können.

Zur Schaffung einer Verriegelungsvorrichtung, welche in angekuppeltem Zustand die beiden Kupplungsteile in Schieberichtung (d.h. in Fahrzeuglängsrichtung bei den in Fig. 1 dargestellten Sattelzügen) bezüglich einander verriegelt, sind sowohl das erste 110, 150 als auch das zweite Kupplungsteil 120, 160 je mit zwei durchgehenden, quer zur Fahrzeuglängsrichtung verlaufenden, horizontalen Bohrungen 155, 156 versehen. In angekuppeltem Zustand (in Fig. 1 am Beispiel des ersten Sattelzuges dargestellt) sind die Bohrungen des ersten Kupplungsteils fluchtend zu den Bohrungen des zweiten Kupplungsteils angeordnet und Verriegelungsbolzen 125, 126 durch die zueinander fluchtenden Bohrungen hindurch geführt. Dadurch wird in angekuppeltem Zustand insgesamt eine starre Verbindung zwischen dem ersten Kupplungsteil 110 und dem zweiten Kupplungsteil 120 geschaffen.

Auf der plattformartigen Basisvorrichtung 112, 152 mit dem im hinteren Bereich angeformten ersten Kupplungsteil 110, 150 ist weiter im vorderen Bereich ein hydraulischer Teleskopzylinder 132, 172 sowie eine mit diesem verbundene und durch diesen in horizontaler Richtung betätigbare Platte 134, 174 angeordnet. Der hydraulische Teleskopzylinder 132, 172 und die Platte 134, 174 verbleiben bei losgekuppeltem Sattelauflieger 140, 180 auf der am Sattelschlepper 130, 170 angebrachten Basisvorrichtung 112, 152. Um bei losgekuppeltem Sattelauflieger 140, 180 die plattformartige Basisvorrichtung 112, 152 in ihrem vorderen Bereich auf dem Sattelschlepper 130, 150 abzustützen, ist eine Stütze 176 zwischen der in losgekuppeltem Zustand drehfest auf dem Sattelschlepper 130, 170 fixierten Basisvorrichtung 112, 152 und dem Sattelschlepper 130, 170 angeordnet. In angekuppeltem Zustand ist diese Stütze entfernt und die Plattform 112, 152 mittels des Drehkranzes 154 und der Schwenkachse 153 gelenkig auf dem Sattelschlepper 130, 170 angeordnet.

Bei angekuppeltem Sattelauflieger 140, 180 (erster Sattelzug in Fig. 1) dient die Platte 134, 174 als Frontwand 134, 174 einer auf dem Sattelauflieger 140, 180 angeordneten Mulde144, 184, die zur Aufnahme von Schüttgut ausgebildet ist. Mittels des Teleskopzylinders 132, 172 ist die Frontwand 134, 174 in Fahrzeuglängsrichtung in der Mulde 144, 184 verschiebbar, um das Schüttgut zum Entleeren durch eine Heckklappe der Mulde 144, 184 hindurch auszustossen. Da die Basisvorrichtung 112, 152 in angekuppeltem Zustand starr mit dem Sattelauflieger 140, 180 verbunden ist, sind die Muldenfrontwand 134, 174 und der Teleskopzylinder 132, 172 in angekuppeltem Zustand in gleicher Weise mit dem Rest der Mulde 144, 184 und dem Sattelauflieger 140, 180 verbunden, wie dies bei einer gebräuchlichen Sattelauflieger-Ausstossermulde der Fall ist. Die Heckklappen der beiden in Fig. 1 dargestellten identischen Mulden 144, 184 sind vertikal in der Mitte unterteilbar und mittels einer Drehkipp-Vorrichtung (ähnlich einer Drehkipp-Vorrichtung für Drehkipp-Fenster) an den Seitenwänden der Mulden 144, 184 angelenkt. Dadurch können die Mulden 144, 184 heckseitig vollständig geöffnet werden.

Im hintersten Bereich des ersten Sattelaufliegers 140 ist ein zum ersten Kupplungsteil 110, 150 identisches, kastenförmig nach Art eines Steckers ausgebildetes Kupplungsteil 190 derart starr angebracht, dass der vom zweiten Sattelschlepper 170 entkuppelte zweite Sattelauflieger 180 mittels des starr zuvorderst am zweiten Sattelauflieger 180 angebrachten buchsenförmigen Kupplungsteils 160 und des zuhinterst am ersten Sattelauflieger 140 angebrachten steckerartigen Kupplungsteils 190 an den ersten Sattelauflieger 140 angekuppelt werden kann. In der Darstellung der Fig. 1 ist das steckerartige Kupplungsteil 190 am ersten Sattelauflieger 140 vollständig in das buchsenartige Kupplungsteil 160 am zweiten Sattelauflieger 180 eingeschoben, so dass die entsprechenden horizontalen Querbohrungen je zueinander fluchten, und durch die fluchtenden Bohrungen hindurch sind Verriegelungsbolzen geführt. Dadurch wird eine starre Verbindung zwischen dem zweiten Sattelauflieger 180 und dem ersten Sattelauflieger 140 geschaffen.

Zum Verladen des zweiten Sattelzuges auf den ersten Sattelzug wird zunächst der zweite Sattelauflieger 180 mittels gebräuchlicher Stützbeine 182 auf dem Boden abgestützt und durch Lösen der die Kupplungsteile 150, 160 umfassenden zweiten Sattelschlepperkupplung vom zweiten Sattelschlepper 170 losgekuppelt, worauf der zweite Sattelschlepper 170 weggefahren wird. Dann wird der erste Sattelzug rückwärts an den zweiten Sattelauflieger 180 herangefahren und möglichst genau vor diesem positioniert, worauf durch weiteres Rückwärtsfahren das steckerartige Kupplungsteil 190 am ersten Sattelauflieger 140 in das buchsenartige Kupplungsteil 160 am zweiten Sattelauflieger 180 eingeschoben wird. Anschliessend werden die Verriegelungsbolzen durch die fluchtenden Bohrungen in den Kupplungsteilen 190, 160 hindurch geführt, um den zweiten Sattelauflieger 180 starr an den ersten Sattelauflieger 140 anzukuppeln. Nun wird die Heckklappe der Mulde 144 des ersten Sattelaufliegers 140 vollständig geöffnet, die Frontwand 134 der Mulde 144 des ersten Sattelzuges mittels des Teleskopzylinders 132 ganz nach hinten gestossen und die Mulde 184 des zweiten Sattelzuges mittels einer Befestigungsvorrichtung an die Frontwand 134 der Mulde 144 des ersten Sattelzuges angehängt. Anschliessend wird die Frontwand 134 der Mulde 144 des ersten Sattelzuges mittels des Teleskopzylinders 132 wieder nach vorne gezogen und dabei die Mulde 184 des zweiten Sattelzuges durch die offene Heckklappe hindurch in die Mulde 144 des ersten Sattelzuges hinein gezogen. Als nächstes wird der zweite Sattelschlepper 170 auf die nun leere Ladefläche des zweiten Sattelaufliegers 180 verladen. Danach werden die beiden Radachsen 141, 143 des ersten Sattelaufliegers 140, die mittels Luftfederung hochziehbar sind, hochgezogen und die Stützbeine 182 des zweiten Sattelaufliegers 180 eingefahren, worauf der zweite Sattelzug mittels des ersten Sattelzuges transportiert werden kann.

Für das Abladen des zweiten Sattelzuges vom ersten werden im wesentlichen die oben beschriebenen Schritte zum Verladen in umgekehrter Reihenfolge und Ausführungsrichtung ausgeführt.

In der Figur 2.a ist ein erster Sattelzug dargestellt, der mit einer Sattelschlepperkupplung ausgerüstet ist, welche zu den Sattelschlepperkupplungen der in Fig. 1 dargestellten Sattelzügen identisch ist. Der in Fig. 2.a dargestellte Sattelzug ist zum gegenseitigen Verladen mit einem weiteren identischen Sattelzug ausgebildet. In Fig. 2.b ist eine Anordnung mit dem in Fig. 2.a dargestellten Sattelzug und einem weiteren, zu diesem identischen Sattelzug dargestellt.

Die in den Figuren 2.a und 2.b dargestellten Sattelzüge unterscheiden sich im wesentlichen bloss hinsichtlich der Ausbildung der Ausstossermulden 244, 284 von den in Fig. 1 dargestellten Sattelzügen. In Fig. 2.c ist in einer Detailansicht ein Querschnitt durch die Ausstossermulde 244 des in Fig. 2.a und Fig. 2.b dargestellten ersten Sattelzuges in einem zusammengeschobenen Zustand dargestellt.

Die Mulde 244 des in Fig. 2.a dargestellten Sattelzuges ist wiederum als AusstosserMulde 244 ausgebildet. Auf der plattformartigen Basisvorrichtung 212 der Sattelschlepperkupplung mit dem im hinteren Bereich angeformten ersten, sattelschlepperseitigen Kupplungsteil 210 ist wiederum im vorderen Bereich ein hydraulischer Teleskopzylinder 232 sowie eine mit diesem verbundene und durch diesen zum Ausstossen des Schüttgutes in Längsrichtung in der Mulde 244 verschiebbare Muldenfrontwand 234 angeordnet. Der obere Muldenrand der Mulde 244 des in Fig. 2.a dargestellten Sattelzuges ist mit einem oberen Traggurt 246 versehen, um der Mulde 244 die erforderliche Steifigkeit und Stabilität zu verleihen.

Die Mulde 244 ist in der Mitte in eine vordere Muldenhälfte 247 und eine hintere Muldenhälfte 248 unterteilbar. Mittels einer Hebevorrichtung, welche mehrere Parallelogrammlenker 249 umfasst, kann die hintere Muldenhälfte 248 um die Höhe des oberen Traggurtes 246 angehoben werden. Anschliessend kann die hintere Muldenhälfte 248 mittels des Teleskopzylinders 232 und der Muldenfrontwand 234 teleskopartig in die vordere Muldenhälfte 247 hinein geschoben werden. Sobald die beiden Muldenhälften 247, 248 vollständig ineinander geschoben sind, ist die (leere) Mulde 244 vollständig auf der Basisvorrichtung 212 der Sattelschlepperkupplung angeordnet. In Fig. 2.c ist ein Querschnitt durch die zusammengeschobene Mulde 244 dargestellt. Sobald die Mulde 244 vollständig zusammengeschoben und auf der Basisvorrichtung angeordnet ist, kann der Sattelauflieger 240 vom Sattelschlepper 230 losgekuppelt werden, wobei die gesamte zusammengeschobene Mulde 244 auf dem Sattelschlepper 230 verbleibt und auf dem Sattelauflieger 240 eine grosse freie Ladefläche vorhanden ist.

Zum Verladen eines zweiten, identischen Sattelzuges auf den in Fig. 2.a dargestellten ersten Sattelzug werden zunächst gleichzeitig die Mulden 244, 284 auf den beiden Sattelzügen teleskopartig zusammengeschoben. Dann wird der zweite Sattelauflieger 280 vom zweiten Sattelschlepper 270 entkuppelt und mittels eines starr am Heck des ersten Sattelaufliegers 240 angeordneten steckerförmigen Kupplungsteils 290 und eines starr an der Front des zweiten Sattelaufliegers 280 angeordneten buchsenförmigen Kupplungsteils 260 für eine erfindungsgemässe Sattelschlepperkupplung starr an den ersten Sattelauflieger 240 angekuppelt. Anschliessend wird der zweite Sattelschlepper 270 auf die grosse freie Ladefläche verladen, welche auf den beiden zusammengekuppelten Sattelaufliegern 240, 280 gebildet wird. In Fig. 2.b sind die beiden Sattelzüge in verladenem Zustand dargestellt. In analoger Weise könnte auch noch der Sattelauflieger eines dritten Sattelzuges starr an den zweiten Sattelauflieger 280 angekuppelt werden und der dritte Sattelschlepper auf die durch die drei starr zusammengekuppelten Sattelauflieger gebildete Ladefläche verladen werden.

In der Figur 3.a ist ein Sattelschlepper 330 mit losgekuppeltem Sattelauflieger 340 dargestellt, wobei der durch den Sattelschlepper 330 und den Sattelauflieger 340 gebildete Sattelzug mit einer Sattelschlepperkupplung gemäss einer weiteren bevorzugten Variante der Erfindung versehen ist. In der Figur 3.b ist dieser Sattelzug mit angekuppeltem Sattelauflieger 340 dargestellt.

Der in Fig. 3 dargestellte Sattelschlepper 330 ist mit einer für eine gebräuchliche Sattelschlepperkupplung geeigneten Sattelplatte 305 ausgerüstet, die mit einer zur Aufnahme eines Königszapfens ausgebildeten Tasche versehen ist. Auf der Sattelplatte 305 ist eine plattformartig ausgebildete Adaptervorrichtung 312 angeordnet. Die Adapterplattform 312 ist mit einem nach unten vorstehenden Königszapfen versehen, welcher in der Tasche der Sattelplatte 305 aufgenommen ist. Dadurch ist die Adapterplattform 312 gelenkig mit dem Sattelschlepper 330 verbunden.

Das erste Kupplungsteil 310 der in Fig. 3.a und 3.b dargestellten Sattelschlepperkupplung zum wahlweise lösbaren Ankuppeln des Sattelaufliegers 340 am Sattelschlepper 330 ist als integrale Partie im hinteren Bereich der Adapterplattform 312 ausgebildet. Es weist eine zu den sattelschlepperseitigen Kupplungsteilen 110, 150, 210, 250 der Sattelschlepperkupplungen in den Figuren 1, 2.a und 2.b identische Form auf und ist wie diese nach Art eines kastenförmigen Steckers ausgebildet. Das zweite Kupplungsteil 320 der Sattelschlepperkupplung ist starr im vordersten Bereich des Sattelaufliegers 340 angebracht und identisch zu den sattelaufliegerseitigen Kupplungsteilen 120, 160, 220, 260 der Sattelschlepperkupplungen in den Figuren 1, 2.a und 2.b ausgebildet, d.h., es ist buchsenförmig ausgebildet und mit einem der Kastenform des ersten Kupplungsteils 310 entsprechenden Hohlraum versehen. Zum Ankuppeln des Sattelaufliegers 340 an den Sattelschlepper 330 wird das erste Kupplungsteil 310 in das zweite Kupplungsteil 320 eingeschoben. In angekuppeltem Zustand wird durch die Stecker-Buchsen-Anordnung eine senkrecht zur Einschieberichtung wirkende formschlüssige Verbindung zwischen den beiden Kupplungsteilen 310, 320 geschaffen.

Analog zu den in Fig. 1, 2.a und 2.b dargestellten Sattelschlepperkupplungen ist bei der in Fig. 3.a und 3.b dargestellten Sattelschlepperkupplung das steckerförmige erste Kupplungsteil 310 keilförmig ausgebildet, um im Zuge des Ankuppelns als Zentriervorrichtung zu wirken. Zur Verriegelung der beiden Kupplungsteile 310, 320 in Schieberichtung sind wiederum sowohl das erste als auch das zweite Kupplungsteil je mit zwei durchgehenden, quer zur Fahrzeuglängsrichtung verlaufenden, horizontalen Bohrungen versehen. In angekuppeltem Zustand (Fig. 3.b) sind Verriegelungsbolzen durch die zueinander fluchtenden Bohrungen hindurch geführt. Dadurch wird in angekuppeltem Zustand insgesamt eine starre Verbindung zwischen dem ersten, an der Adapterplattform 312 befesttigten Kupplungsteil 310 einerseits und dem zweiten, am Sattelauflieger 340 befestigten Kupplungsteil 320 andrerseits geschaffen.

An der Adapterplattform 312 ist weiter im vorderen Bereich ein hydraulischer Teleskopzylinder 332 angeordnet. Die Adapterplattform 312 übernimmt somit zusätzlich die analoge Funktion wie die Basisvorrichtungen 112, 152, 212 bei den in den Figuren 1, 2.a und 2.b dargestellten Sattelschlepperkupplungen. Der Teleskopzylinder 332 ist einerseits um eine im wesentlichen horizontale Querachse schwenkbar an der Adapterplattform 312 angelenkt und andrerseits in angekuppeltem Zustand mit einer auf dem Sattelschlepper 340 angeordneten Kippmulde 344 verbunden, um diese zum Kippen in im wesentlichen vertikaler Richtung zu betätigen. Die Adapterplattform 312 ist weiter mit einer hochklappbaren Stütze 336 versehen, um bei losgekuppeltem Sattelauflieger 340 die Adapterplattform 312 in ihrem vorderen Bereich auf dem Sattelschlepper 330 abzustützen. In angekuppeltem Zustand ist diese Stütze 336 hochgeklappt.

Mittels der auf der Sattelplatte 305 angeordneten Adapterplattform 312 können an den in Fig. 3.a und 3.b dargestellten Sattelschlepper 330 Sattelauflieger angekuppelt werden, welche mit sattelaufliegerseitigen Kupplungsteilen versehen sind, die zu den in den Figuren 1 bis 3.b dargestellten sattelaufliegerseitigen Kupplungsteilen 120, 160, 220, 260, 320 identisch sind. Wird die Adapterplattform 312 vom Sattelschlepper 330 entfernt, so können auch Sattelauflieger angekuppelt werden, die mit einem gebräuchlichen Königszapfen ausgerüstet sind.

Zusammenfassend ist festzustellen, dass durch die Erfindung eine Sattelschlepperkupplung angegeben wird, welche es ermöglicht, einen Sattelauflieger entweder gelenkig an einen Sattelschlepper oder starr an einen weiteren Sattelauflieger anzukuppeln.

## Patentansprüche

1. Sattelschlepperkupplung zum wahlweise lösbaren Ankuppeln eines Sattelaufliegers (140, 180, 240, 280, 340) an einen Sattelschlepper (130, 170, 230, 270, 330), mit einem gelenkig mit dem Sattelschlepper (130, 170, 230, 270, 330) verbindbaren ersten Kupplungsteil (110, 150, 210, 310) und einem starr am Sattelauflieger (140, 180, 240, 280, 340) anbringbaren zweiten Kupplungsteil (120, 160, 260, 320), wobei zum Ankuppeln des Sattelaufliegers (140, 180, 240, 280, 340) am Sattelschlepper (130, 170, 230, 270, 330) die beiden Kupplungsteile (110, 150, 210, 310, 120, 160, 260, 320) starr miteinander verbindbar sind.

2. Sattelschlepperkupplung nach Anspruch 1, dadurch gekennzeichnet, dass ein Teil des aus dem ersten Kupplungsteil (110, 150, 210, 310) und dem zweiten Kupplungsteil (120, 160, 260, 320) gebildeten Teilepaares eine nach Art eines Steckers ausgebildete Partie und das andere Teil dieses Teilepaares eine nach Art einer Buchse ausgebildete Partie aufweist, wobei die Steckerpartie und die Buchsenpartie derart ausgebildet und angeordnet sind, dass zum Ankuppeln die Steckerpartie in die Buchsenpartie einschiebbar ist und in angekuppeltem Zustand durch die Stecker-Buchsen-Anordnung eine senkrecht zur Einschieberichtung wirkende formschlüssige Verbindung der beiden Kupplungsteile (110, 150, 210, 310, 120, 160, 260, 320) geschaffen wird.

3. Sattelschlepperkupplung nach Anspruch 1 oder 2, dadurch gekennzeichnet, dass das erste Kupplungsteil (110, 150, 210, 310) starr an einer gelenkig mit dem Sattelschlepper (130, 170, 230, 270, 330) verbindbaren Basisvorrichtung (112, 152, 212, 312) befestigt ist, welche zum Anbringen eines oder mehrerer weiterer mit dem Sattelauflieger (140, 180, 240, 280, 340) verbindbaren Elemente (132, 172, 232, 332) ausgebildet ist.

4. Sattelschlepperkupplung nach einem der Ansprüche 1 bis 3, dadurch gekennzeichnet, dass das erste Kupplungsteil (110, 150, 210) mittels eines ersten Drehgelenks um eine in Bezug auf die Sattelschlepperlängsrichtung im wesentlichen horizontale Querachse (153) schwenkbar und mittels eines zweiten, einen Drehkranz (154) umfassenden Drehgelenks um eine in Bezug auf den Sattelschlepper (130, 170, 230, 270) im wesentlichen senkrechte Schwenkachse schwenkbar am Sattelschlepper (130, 170, 230, 270) angelenkt ist.

5. Sattelschlepperkupplung nach einem der Ansprüche 1 bis 3, dadurch gekennzeichnet, dass das erste Kupplungsteil (310) an einer Adaptervorrichtung (312) angeordnet ist, die mit einem Königszapfen versehen ist, welcher in einer Tasche einer am Sattelschlepper (330) angeordneten, als Teil einer konventionellen Sattelschlepperkupplung ausgebildeten Sattelplatte (305) aufnehmbar ist.

6. Einen Sattelschlepper (130, 170, 230, 270, 330) und einen Sattelauflieger (140, 180, 240, 280, 340) umfassender Sattelzug, mit einer Sattelschlepperkupplung nach einem der Ansprüche 1 bis 5, umfassend ein gelenkig mit dem Sattelschlepper (130, 170, 230, 270, 330) verbundenes erstes Kupplungsteil (110, 150, 210, 310) und ein starr am Sattelauflieger (140, 180, 240, 280, 340) angebrachtes zweites Kupplungsteil, wobei zum Ankuppeln des Sattelaufliegers (140, 180, 240, 280, 340) am Sattelschlepper (130, 170, 230, 270, 330) die beiden Kupplungsteile (110, 150, 210, 310, 120, 160, 260, 320) starr miteinander verbindbar sind.

7. Sattelzug nach Anspruch 6, mit einer Sattelschlepperkupplung nach einem der Ansprüche 2 bis 4, wobei das erste Kupplungsteil (110, 150, 210) starr an einer gelenkig am Sattelschlepper (130, 170, 230, 270) angeordneten Basisvorrichtung (112, 152, 212) befestigt ist, welche zum Anbringen eines oder mehrerer weiterer mit dem Sattelauflieger (140, 180, 240, 280) verbindbaren Elemente (132, 172, 232) ausgebildet ist, und wobei wenigstens ein Teil der Wände (134, 174, 234) eines auf dem Sattelauflieger (140, 180, 240, 280) angeordneten Transportgutbehälters (144, 184, 244, 284) in leerem Zustand des Transportgutbehälters (144, 184, 244, 284) auf der Basisvorrichtung (112, 152, 212) verstaubar ist.

8. Sattelschlepper (130, 170, 230, 270, 330) für Sattelzug nach einem der Ansprüche 6 oder 7, mit einem gelenkig mit dem Sattelschlepper (130, 170, 230, 270, 330) verbundenen ersten Kupplungsteil (110, 150, 210, 310) für eine Sattelschlepperkupplung nach einem der Ansprüche 1 bis 4.

9. Sattelschlepper (130, 170, 230, 270, 330) nach Anspruch 8, mit einem gelenkig mit dem Sattelschlepper (130, 170, 230, 270, 330) verbundenen ersten Kupplungsteil (110, 150, 210, 310) für eine Sattelschlepperkupplung nach einem der Ansprüche 2 bis 4, wobei das erste Kupplungsteil (110, 150, 210, 310) starr an einer gelenkig am Sattelschlepper (130, 170, 230, 270, 330) angeordneten Basisvorrichtung (112, 152, 212, 312) befestigt ist, an welcher weiter ein mit einem auf dem Sattelauflieger (140, 180, 240, 280, 340) angeordneten Transportgutbehälter (144, 184, 244, 284, 344) verbindbares Betätigungselement (132, 172, 232, 332) einer Entleerungsvorrichtung zum Entleeren des Transportgutbehälters (144, 184, 244, 284, 344) angebracht ist.

10. Sattelauflieger (140, 180, 240, 280, 340) für Sattelzug nach einem der Ansprüche 6 oder 7, mit einem starr in einem vorderen Bereich des Sattelaufliegers (140, 180, 240, 280, 340) angebrachten zweiten Kupplungsteil (120, 160, 260, 320) für eine Sattelschlepperkupplung nach einem der Ansprüche 1 bis 4.

11. Sattelauflieger (140, 240), dadurch gekennzeichnet, dass in einem hinteren Bereich des Sattelaufliegers (140, 240) ein erstes Kupplungsteil (190, 290) für eine Sattelschlepperkupplung nach einem der Ansprüche 1 bis 4 derart starr angebracht ist, dass an den Sattelauflieger (140, 240) mittels dieses ersten Kupplungsteils (190, 290) und eines zweiten Kupplungsteils (160, 260) für eine Sattelschlepperkupplung nach einem der Ansprüche 1 bis 4, das starr in einem vorderen Bereich eines weiteren Sattelaufliegers (180, 280) angebracht ist, der weitere Sattelauflieger (180, 280) angekuppelt werden kann, wobei in angekuppeltem Zustand die beiden Sattelauflieger (140, 180, 240, 280) mittels der sie kuppelnden Kupplungsteile (190, 290, 160, 260) starr miteinander verbunden sind.

12. Sattelauflieger nach Anspruch 11, gekennzeichnet durch eine Ausbildung des hinteren Bereichs des Sattelaufliegers (140, 240) und des in diesem hinteren Bereich angebrachten ersten Kupplungsteils (190, 290) derart, dass die Gesamtlänge einer Anordnung aus dem Sattelauflieger und dem starr an diesem angekuppelten weiteren Sattelauflieger gebildeten Anordnung kleiner ist als die aus der Länge des Sattelaufliegers und der Länge des weiteren Sattelaufliegers in losgekuppeltem Zustand gebildete Summe.
